# EUROPÄISCHE PATENTSCHRIFT

(11) **EP 2 526 316 B1**
(45) Veröffentlichungstag und Bekanntmachung des Hinweises auf die Patenterteilung: **09.10.2013**
(21) Anmeldenummer: 10785330.1
(22) Anmeldetag: 02.11.2010
(51) Int. Cl.: F16D 13/58

(54) **KUPPLUNGSAGGREGAT**
CLUTCH UNIT
UNITÉ EMBRAYAGE

(30) Priorität: 20.01.2010 DE 102010005036
(43) Veröffentlichungstag der Anmeldung: 28.11.2012
(73) Patentinhaber: Volkswagen Aktiengesellschaft, 38440 Wolfsburg (DE)
(72) Erfinder: SCHNEEGANS, André, 31234 Edemissen (DE)
(86) Internationale Anmeldenummer: PCT/EP2010/006684
(87) Internationale Veröffentlichungsnummer: WO 2011/088857

(56) Entgegenhaltungen:
- EP-A1- 0 198 747
- WO-A2-2007/000140
- DE-A1- 3 347 913
- DE-A1-102008 031 953

## Beschreibung

### Gebiet der Erfindung:

Die Erfindung bezieht sich auf ein Kupplungsaggregat, umfassend eine Anpressplatte, mittels derer durch axiale Verlagerung eine Reibbeläge tragende Kupplungsscheibe zur Bildung eines Reibschlusses an eine Druckplatte anpressbar ist, wobei die axiale Verlagerung der Anpressplatte durch eine axiale Verlagerung einer Hebelfederplatte mit kreisförmigem Außenumfang bewirkbar ist, die an einem oder mehreren Höckern anliegt, welche ringförmig auf einer der Hebelfederplatte zugewandten Fläche der Anpressplatte radial beabstandet von deren Außenrand angeordnet sind, und wobei die Anpressplatte auf ihrer der Hebelfederplatte zugewandten Seite radial außen einen ringartigen, axial vorspringenden Rand aufweist.

### Stand der Technik:

Derartige Kupplungsaggregate sind bekannt aus der DE 10 2008 031 953 A1 und DE 33 47 913 A1.

Die genannte Druckschrift offenbart ein Kupplungsaggregat, insbesondere ein Doppelkupplungsaggregat zur Verwendung in einem Doppelkupplungsgetriebe. Die bekannte Doppelkupplung umfasst zwei Kupplungsscheiben, die mit unterschiedlichen Getriebeeingangswellen eines nachgeordneten Schaltgetriebes verbindbar sind, wobei das Getriebe zwei Teilgetriebe aufweist, zwischen denen lastunterbrechungsfrei geschaltet werden kann. Die Kupplungsschreiben tragen Reibbeläge, die axial zwischen einer den beiden Kupplungen gemeinsamen Druckplatte und jeweils einer der jeweiligen Kupplung zugeordneten Anpressplatte einspannbar sind. Die Druckplatte ist über eine Lagerung getriebeseitig gelagert und in Axialrichtung festgelegt, um die für die Reibungskupplungen erforderlichen Schließkräfte axial abzufangen. Die Anpressplatten sind mit der Druckplatte drehfest, jedoch begrenzt axial verlagerbar verbunden. Jeder Anpressplatte ist eine tellerfederähnliche, ringförmig angeordnete Hebelelemente aufweisende Hebelfederplatte zugeordnet. Die Hebelfederplatten haben tellerfederähnliche Eigenschaften, sind also federnd in ihrer Konizität veränderbar. Wenigstens eine der Hebelfederplatten ist der ihr zugeordneten Anpressplatte unmittelbar benachbart angeordnet. Insbesondere liegen ihre Hebelelemente an Höckern auf der ihr zugewandten Fläche der Anpressplatte an. Diese Höcker sind vom Rand der Anpressplatte radial beabstandet und wirken jeweils als Kipppunkt für das jeweils anliegende Hebelelement. Zur Kupplungsbetätigung wird der Zentralbereich der Hebelfederplatte axial verschoben, sodass die Hebelelemente eine axial gerichtete Kraft auf die Anpressplatte ausüben, um so eine entsprechende Axialverlagerung der Kupplungsscheibe zu bewirken, d.h. die Kupplungsscheibe an die Druckplatte anpresst. Die Anpressplatte weist auf ihrer der Hebelfederplatte zugewandten Seite radial außen einen ringartigen, axial vorspringenden Rand auf, auf welchem die radial äußeren Enden der Hebelelemente aufliegen und an dem die Hebelkraft ansetzt.

Nachteilig bei dem bekannten Kupplungsaggregat ist seine Verschmutzungsanfälligkeit. So bilden die Anpressplatte mit ihrem axial vorspringenden Rand und die Hebelfederplatte mit ihren auf dem axial vorspringenden Rand aufliegenden Hebelelementen einen quasi geschlossenen Raum, in dem sich von außen eindringender Staub und sich von innen ansammelnder Abrieb, nachfolgend gemeinsam als "Sedimente" bezeichnet, ablagern können. Bei übermäßig dicken Sedimentschichten kann es zur Behinderung der Beweglichkeit der Anpressplatte und somit zu Schwierigkeiten beim Einlegen von Gängen kommen.

### Aufgabenstellung:

Es ist die Aufgabe der vorliegenden Erfindung, ein gattungsgemäßes Kupplungsaggregat derart weiterzubilden, dass die Gefahr der Verschmutzung durch Sedimente verringert wird.

### Darlegung der Erfindung:

Diese Aufgabe wird in Verbindung mit den Merkmalen des Oberbegriffs von Anspruch 1 dadurch gelöst, dass an der radial innerer Wandung des axial vorspringenden Randes wenigstens drei in Umfangsrichtung beabstandete, radiale Vorsprünge angeordnet sind, wobei ein Durchmesser eines die radialen Vorsprünge tangierenden Kreises, dem Außendurchmesser der Hebelfederplatte entspricht, sodass diese an den radialen Vorsprüngen zentriert gehalten und ihr Außenrand zwischen jeweils zwei benachbarten radialen Vorsprüngen von der radial inneren Wandung des axial vorspringenden Randes beabstandet ist.

Bevorzugte Ausführungsformen der Erfindung sind Gegenstand der abhängigen Ansprüche.

Zunächst ist eine Änderung der relativen Dimensionierung von Anpressplatte und Hebelfederplatte im Vergleich zum Stand der Technik vorgesehen. Insbesondere ist der Außendurchmesser der Hebelfederplatte kleiner als der Innendurchmesser des axial vorspringenden Randes der Anpressplatte. Die axial äußeren Enden der Hebelelemente liegen somit nicht auf dem axial vorspringenden Rand auf. Dieser kann vielmehr zur Zentrierung der Hebelfederplatte dienen. Allerdings ist erfindungsgemäß vorgesehen, dass die Hebelfederplatte nicht direkt durch die radial innere Wandung des axial vorspringenden Randes zentriert wird, sondern indirekt über eine Mehrzahl radialer Vorsprünge, die sich von dem axial vorspringenden Rand nach radial innen erstrecken. Sind genau drei solcher radialer Vorsprünge vorgesehen, definieren ihre radial innersten Punkte einen Kreis. Bei Verwendung von mehr als drei Vorsprüngen ist der eingeschriebene Kreis überbestimmt. Der Durchmesser des eingeschriebenen Kreises entspricht dem Außendurchmesser der Hebelfederplatte. Diese kann somit in den Freiraum zwischen den Vorsprüngen eingelegt werden und wird daher von den Vorsprüngen zentriert gehalten. Zwischen jeweils zwei benachbarten Vorsprüngen ist der Außenrand der Hebelfederplatte von der axial inneren Wandung des axial vorspringenden Randes der Anpressplatte beabstandet. Anpressplatte und Hebelfederplatte bilden somit keinen geschlossenen Raum mehr. Sediment, das von außen eingedrungen oder innen durch Abrieb erzeugt wurde, wird durch die bei Betrieb herrschenden Zentrifugalkräfte nach außen getragen und kann durch den erfindungsgemäß entstehenden Spalt zwischen Anpressplatte und Hebelfederplatte entweichen. Eine Anlagerung, die zum Aufbau dicker Schmutzschichten führen könnte, findet nicht statt.

Zwar ist es möglich, bekannte Anpressplatten mit radialen Vorsprüngen, die als separate Elemente bereit gestellt werden, nachzurüsten. Als günstiger wird es jedoch angesehen, die Vorsprünge als Gussnocken auszubilden, die mit der als Metallgussteil ausgebildeten Anpressplatte einteilig verbunden sind. Die Herstellung derart modifizierter Anpressptatten ist deutlich kostengünstiger als eine arbeitsintensive Nachrüstung mit separaten Elementen. Typischerweise sind die Anpressplatte und die Hebelfederplatte von einem haubenartigen Gehäusedeckel umgriffen. Ein solcher, bereits aus dem Stand der Technik grundsätzlich bekannter Gehäusedeckel weist Fußbereiche auf, die auf der Druckplatte fixiert, beispielsweise mit dieser vernietet sind. An die Fußbereiche schließen sich axial ausgerichtete Stützwände an, die gemeinsam eine den eigentlichen Deckel bildende Abschlussplatte tragen. Mit anderen Worten verbindet die Abschlussplatte, die im Wesentlichen parallel zur der Druckplatte ausgerichtet ist, die in Umfangsrichtung voneinander beabstandeten Stützwände. Die Bereiche zwischen den Stützwänden werden typischerweise von äußeren Fixierungslaschen der Anpressplatte formschlüssig durchsetzt, wodurch eine Verdrehsicherung zwischen der Anpressplatte und dem Gehäusedeckel und über diesen mit der Druckplatte realisiert wird. Auch die spaltartigen Bereiche zwischen dem Außenrand der Anpressplatte und den Innenflächen der Stützwände sind anfällig für die Ablagerung von Sedimenten. Zu dicke Sedimentschichten in diesen Bereichen können die Beweglichkeit der Anpressplatte und damit die Leichtgängigkeit der Schaltvorgänge beeinträchtigen. Um hier eine Verbesserung zu erzielen, ist bei einer bevorzugten Ausführungsform der Erfindung vorgesehen, dass die Stützwände jeweils wenigstens eine Auslassöffnung aufweisen. Durch diese Auslassöffnungen können Sedimente, die bei Betrieb durch die Zentrifugalkraft an die Innenseiten der Stützwände getrieben werden, nach außerhalb des Gehäuses austreten. Eine Ansammlung und insbesondere Schichtbildung im Inneren des Gehäuses wird somit zuverlässig vermieden.

Günstigerweise weist jede Stützwand eine Mehrzahl von Auslassöffnungen auf, von denen wenigstens einige axial zueinander versetzt angeordnet sind. Bevorzugt sind die axial zueinander versetzten Auslassöffnungen zusätzlich axial überlappend angeordnet. Auf diese Weise kann über die gesamte Höhe der Stützwände eine Ableitung der Sedimente gewährleistet werden.

Um die Abführung der Sedimente zu erleichtern, kann bei einer vorteilhaften Weiterbildung der Erfindung vorgesehen sein, dass auf der radial inneren Seite jeder Stützwand auf die Auslassöffnungen hin gerichtete Leitkanäle ausgebildet sind. Diese können in die Innenwandung der Stützwände eingeformt sein:

Weitere Merkmale und Vorteile der Erfindung ergeben sich aus der nachfolgenden, speziellen Beschreibung und den Zeichnungen.

### Kurze Beschreibung der Zeichnungen:

Es zeigen:
- Figur 1: eine Schnittdarstellung durch ein erfindungsgemäßes Kupplungsaggregat,
- Figur 2:: eine geschnittene, perspektivische Ansicht der Anpress- und Hebelfederplatte des Kupplungsaggregats von Figur 1,
- Figur 3:: eine ausschnittsweise perspektivische Darstellung eines Gehäusedeckels des Kupplungsaggregates von Figur 1.

Ausführliche Beschreibung bevorzugter Ausführungsformen:

Gleiche Bezugszeichen in den Figuren deuten auf gleiche oder analoge Elemente hin. Positions- oder Richtungsangaben wie "oben", "unten", "rechts", "links" etc. beziehen sich jeweils auf die in Bezug genommene Figur und sind nicht als einschränkend für die Erfindung zu verstehen, die in beliebiger Orientierung realisiert sein kann.

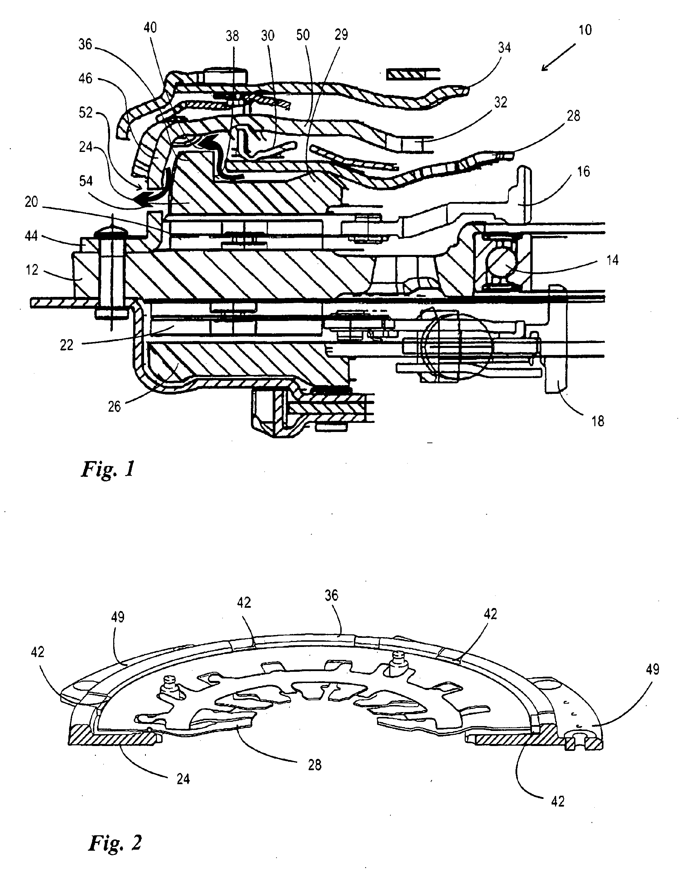

Figur 1 zeigt eine Schnittdarstellung durch ein erfindungsgemäßes Kupplungsaggregat 10. Das Kupplungsaggregat 10 weist zentral eine Druckplatte 12 auf, die mittels eines Lagers 14 gegen ein nachgeordnetes Getriebe gelagert und axial abgestützt ist. Beidseitig der Druckplatte 12 sind Kupplungsscheiben 16, 18 angeordnet, die ihrerseits Reibbeläge 20, 22 tragen. Jeder Kupplungsscheibe 16, 18 ist eine Anpressplatte 24, 26 zugeordnet. Die in Figur 1 obere Anpressplatte 24 steht in Kontakt mit einer Hebelfederplatte 28, die durch einen nicht dargestellten Mechanismus derart ausrückbar ist, dass sie die Anpressplatte 24 mit einem in Figur 1 nach unten gerichteten Druck beaufschlagt, sodass diese die Kupplungsscheibe 16 mit ihren Reibbelägen 20 gegen die Druckplatte 12 verschiebt und einen Reibschluss erzeugt. Hierzu liegt die Hebelfederplatte 28 an Höckern 29 der Anpressplatte 24 an. Die Hebelfederplatte 28 stützt sich dabei über eine Federring 30 gegen einen Gehäusedeckel 32 ab. Zur Betätigung der durch die in Figur 1 unteren Kupplungsscheibe 18 mittels der ihr zugeordneten Anpressplatte 26 wird eine zweite Hebelfederplatte 34, die in nicht im Detail dargestellter Weise mit der Anpressplatte 26 gekoppelt ist, ausgerückt.

Das grundsätzliche Prinzip und die Funktionsweise derartiger Doppelkupplungsaggregate ist aus dem Stand der Technik, insbesondere aus der bereits zitierten DE 10 2008 031 953 A1 und DE 33 47 913 A1. bekannt und soll hier nicht wiederholt werden. Die vorliegende Erfindung bezieht sich auf die spezielle Ausgestaltung der in Figur 1 oberen Anpressplatte 24, der zugeordneten Hebelfederplatte 28 und des Gehäusedeckels 32. Die übrigen, an sich bekannten Elemente des Kupplungsaggregats tragen nicht zur Erfindung bei, sodass auf ihre detaillierte Beschreibung an dieser Stelle verzichtet werden kann. Sie können beispielsweise wie in der zitierten Druckschrift offenbart ausgebildet sein. Die erfindungsgemäßen Merkmale der von der Erfindung betroffenen Elemente sind auch in anderem technischen Kontext als einem Doppelkupplungsaggregat einsetzbar. Beispielweise lassen sich die erfinderischen Merkmale auch bei einer trockenen Einfachkupplung realisieren.

Wie in Figur 1 deutlich erkennbar, ist der Durchmesser der Anpressplatte 24 größer als der Durchmesser der Hebelfederplatte 28. Die erfindungsgemäße Anpressplatte 24 weist radial außen, d.h. links in Figur 1, einen Rand 36 auf, der sich von der der Hebelfederplatte 28 zugewandten Seite der Anpressplatte 24 in axialer Richtung erstreckt. Mit anderen Worten bildet der Rand 36 einen die Anpressplatte 24 umlaufenden Wall. Die relative Dimensionierung der Hebelfederplatte 28 und der Anpressplatte 24 ist so gewählt, dass zwischen der radial inneren Kante 38 des Randes 36 und dem Außenumfang der Hebelfederplatte 28 eine spaltartige Lücke liegt. Diese spaltartige Lücke ist geeignet, eingedrungenen Staub oder Abrieb, kurz Sedimente, aus dem Raum zwischen der Anpressplatte 24 und der Hebelfederplatte nach außen zu entlassen. Der Sedimentenauslass wird von der Zentrifugalkraft getrieben, die bei Betrieb des Kupplungsaggregates 10 wirkt. Der ungefähre Weg der Sedimente ist durch den Pfeil 40 angedeutet.

Allerdings verläuft die spaltartige Lücke nicht vollumfänglich um die gesamte Hebelfederplatte 28 herum. Wie insbesondere in Figur 2 erkennbar, sind an dem Rand 36 mehrere nach radial innen vorspringende Vorsprünge vorgesehen, welche einen Kreis definieren (im gezeigten Fall überbestimmen), der denselben Umfang hat wie der Außenumfang der Hebelfederplatte 28. Die Hebelfederplatte 28 wird somit von den Vorsprüngen 42 zentriert gehalten. Die Vorsprünge 42 nehmen nur einen sehr geringen Anteil des Gesamtumfangs ein, sodass sie den Abfluss der Sedimente, wie in Figur 1 gezeigt, nicht wesentlich behindern.

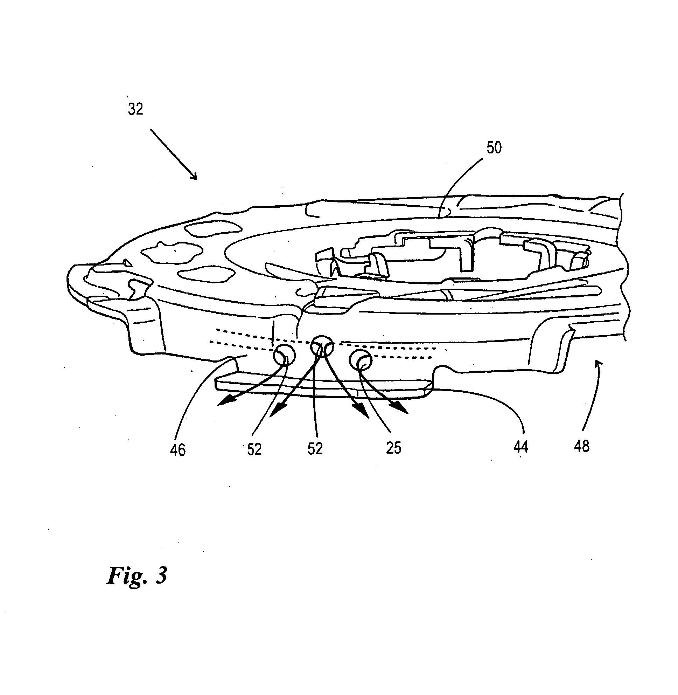

Ein weiteres Merkmal der Erfindung ist ihrer bevorzugten Ausführungsform betrifft den Gehäusedeckel 32, der in Figur 3 separat dargestellt ist. Der Gehäusedeckel 32 besteht im Wesentlichen aus mehreren Fixierungsfüßen 44, die, wie in Figur 1 erkennbar, mit der Druckplatte 12 verbunden sind. Von den Fußbereichen 44 erstecken sich Stützwände 46 nach oben, welche von Ausnehmungen 48 unterbrochen sind, die Befestigungslaschen 49 der Anpressplatte 24 (siehe Figur 2) formschlüssig umgreifen. Der eigentliche Gehäusedeckel wird gebildet von einer Deckelplatte 50, die sämtliche Stützwände 46 verbindet. In den Stützwänden 46 sind Durchbrüche 52 vorgesehen, die, wie in Figur 1 gezeigt, einen Abfluss von Sedimenten aus dem Spalt zwischen dem Gehäusedeckel 32 und der Anpressplatte 24 nach außerhalb des Kupplungsaggregats 10 erlauben. Dieser Abfluss ist in Figur 1 durch den Pfeil 54 angedeutet.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben. Insbesondere ist die Erfindung nicht auf eine Verwendung im Rahmen eines Doppelkupplungsaggregates, insbesondere eines Doppelkupplungsgetriebes beschränkt.

### Bezugszeichenliste

- 10: Kupplungsaggregat
- 12: Druckplatte
- 14: Lager von 12
- 16: Kupplungsscheibe
- 18: Kupplungsscheibe
- 20: Reibbelag von 16
- 22: Reibbelag von 18
- 24: Anpressplatte
- 26: Anpressplatte
- 28: Hebelfederplatte
- 29: Höcker von 24
- 30: Federring
- 32: Gehäusedeckel
- 34: Hebelfederplatte
- 36: Rand von 24
- 38: Innere Kante von 36
- 40: Pfeil
- 42: Vorsprung
- 44: Fuß von 32
- 46: Stützwand von 32
- 48: Ausnehmung
- 49: Befestigungslasche von 24
- 50: Deckelplatte von 32
- 52: Durchbruch in 46
- 54: Pfeil

## Patentansprüche

1. Kupplungsaggregat, umfassend eine Anpressplatte (24), mittels derer durch axiale Verlagerung eine Reibbeläge (20) tragende Kupplungsscheibe (16) zur Bildung eines Reibschlusses an eine Druckplatte (12) anpressbar ist, wobei die axiale Verlagerung der Anpressplatte (24) durch eine axiale Verlagerung einer Hebelfederplatte (28) mit kreisförmigem Außenumfang bewirkbar ist, die an einem oder mehreren Höckern (29) anliegt, welche ringförmig auf einer der Hebelfederplatte (28) zugewandten Fläche der Anpressplatte (24) radial beabstandet von deren Außenrand angeordnet sind, und wobei die Anpressplatte (24) auf ihrer der Hebelfederplatte (28) zugewandten Seite radial außen einen ringartigen, axial vorspringenden Rand (36) aufweist,
**dadurch gekennzeichnet,**
**dass** an der radial innerer Wandung (38) des axial vorspringenden Randes (36) wenigstens drei in Umfangsrichtung beabstandete, radiale Vorsprünge (42) angeordnet sind, wobei ein Durchmesser eines die radialen Vorsprünge (42) tangierenden Kreises, dem Außendurchmesser der Hebelfederplatte (28) entspricht, sodass diese an den radialen Vorsprüngen (42) zentriert gehalten und ihr Außenrand zwischen jeweils zwei benachbarten radialen Vorsprüngen (42) von der radial inneren Wandung (38) des axial vorspringenden Randes (36) beabstandet ist.

2. Kupplungsaggregat nach Anspruch 1,
**dadurch gekennzeichnet,**
**dass** die radialen Vorsprünge (42) als Gussnocken ausgebildet und mit der als Metallgussteil ausgebildeten Anpressplatte (24) einteilig verbunden sind.

3. Kupplungsaggregat nach einem der vorangehenden Ansprüche,
**dadurch gekennzeichnet,**
**dass** die Anpressplatte (24) und die Hebelfederplatte (28) von einem haubenartigen Gehäusedeckel (32) umgriffen sind, welcher auf der Druckplatte (12) fixierte Fußbereiche (44), sich an die Fußbereiche (44) anschließende, axial erstreckte Stützwände (46) und eine die Stützwände (46) verbindende, parallel zu der Druckplatte (12) ausgerichtete Abschlussplatte (50) aufweist, wobei die Stützwände (46) jeweils wenigstens eine radial ausgerichtete Auslassöffnung (52) aufweisen.

4. Kupplungsaggregat nach Anspruch 3,
**dadurch gekennzeichnet,**
**dass** jede Stützwand (46) eine Mehrzahl von Auslassöffnungen (53) aufweist, von denen wenigstens einige axial zueinander versetzt angeordnet sind.

5. Kupplungsaggregat nach Anspruch 3,
**dadurch gekennzeichnet,**
**dass** jede Stützwand (46) eine Mehrzahl von Auslassöffnungen (52) aufweist, von denen wenigstens einige axial zueinander versetzt und einander axial überlappend angeordnet sind.

6. Kupplungsaggregat nach einem der Ansprüche 4 bis 5,
**dadurch gekennzeichnet,**
**dass** auf der radial inneren Seite jeder Stützwand (46) auf die Auslassöffnungen (52) hin gerichtete Luftleitkanäle ausgebildet sind.

## Claims

1. Clutch assembly, comprising a pressing plate (24), by means of which a clutch plate (16) which carries friction linings (20) can be pressed onto a pressure plate (12) by axial displacement in order to form a frictional connection, it being possible for the axial displacement of the pressing plate (24) to be brought about by an axial displacement of a lever-spring plate (28) with a circular outer circumference, which lever-spring plate (28) bears against one or more protuberances (29) which are arranged annularly on a face, facing the lever-spring plate (28), of the pressing plate (24) such that they are spaced apart radially from the outer edge of the said pressing plate (24), and the pressing plate (24) having a ring-like, axially projecting edge (36) radially on the outside on its side which faces the lever-spring plate (28), **characterized in that** at least three radial projections (42) which are spaced apart in the circumferential direction are arranged on the radially inner wall (38) of the axially projecting edge (36), a diameter of a circle which is tangent on the radial projections (42) corresponding to the external diameter of the lever-spring plate (28), with the result that the said lever-spring plate (28) is held centred on the radial projections (42) and its outer edge is spaced apart from the radially inner wall (38) of the axially projecting edge (36) between in each case two adjacent radial projections (42).

2. Clutch assembly according to Claim 1, **characterized in that** the radial projections (42) are configured as cast cams and are connected integrally to the pressing plate (24) which is configured as a cast metal part.

3. Clutch assembly according to one of the preceding claims, **characterized in that** the pressing plate (24) and the lever-spring plate (28) are reached around by a hood-like housing cover (32) which has base regions (44) which are fixed on the pressure plate (12), axially extended supporting walls (46) which adjoin the base regions (44), and a closing plate (50) which connects the supporting walls (46) and is oriented parallel to the pressure plate (12), the supporting walls (46) in each case having at least one radially oriented outlet opening (52).

4. Clutch assembly according to Claim 3, **characterized in that** each supporting wall (46) has a plurality of outlet openings (53), of which at least some are arranged so as to be offset axially with respect to one another.

5. Clutch assembly according to Claim 3, **characterized in that** each supporting wall (46) has a plurality of outlet openings (52), of which at least some are arranged so as to be offset axially with respect to one another and so as to overlap one another axially.

6. Clutch assembly according to either of Claims 4 and 5, **characterized in that** air guiding channels which are directed onto the outlet openings (52) are formed on the radially inner side of each supporting wall (46).

## Revendications

1. Unité embrayage, comportant un plateau presseur (24) au moyen duquel un disque d'embrayage (16) portant des garnitures de friction (20) peut être pressé par déplacement axial contre un plateau de pression (12) pour réaliser un engagement par friction, le déplacement axial du plateau presseur (24) pouvant être provoqué par un déplacement axial d'un plateau ressort à leviers (28) présentant une périphérie extérieure circulaire, lequel' s'applique contre un ou plusieurs bossages (29) qui sont disposés de manière annulaire sur une surface du plateau presseur (24) tournée vers le plateau ressort à leviers (28), de manière espacée radialement de son bord extérieur, et le plateau presseur (24) comprenant, sur son côté tourné vers le plateau ressort à levers (28), radialement à l'extérieur, un bord annulaire saillant axialement (36),
**caractérisée en ce**
**qu'**au moins trois saillies radiales (42) espacées dans la direction périphérique sont disposées sur la paroi radialement intérieure (38) du bord saillant axialement (36), le diamètre d'un cercle tangent aux saillies radiales (42) correspondant au diamètre extérieur du plateau ressort à leviers (28), de sorte que celui-ci soit maintenu de manière centrée contre les saillies radiales(42) et que son bord extérieur soit, entre deux saillies radiales (42) adjacentes respectives, espacé de la paroi radialement intérieure ({38) du bord saillant axialement (36).

2. Unité embrayage selon la revendication 1,
**caractérisée en ce que**
les saillies radiales (42) sont réalisées sous forme d'ergots coulés et sont reliées d'une seule pièce au plateau presseur (24) réalisé sous forme de pièce coulée en métal.

3. Unité embrayage selon l'une quelconque des revendications précédentes,
**caractérisée en ce**
**qu'**un couvercle de boîtier (32) de type capot vient en prise autour du plateau presseur (24) et du plateau ressort à leviers (28), lequel couvercle de boîtier comprend des régions de base (44) fixées sur le plateau de pression (12), des parois de support (46) s'étendant axialement et se raccordant aux régions de base (44) et un plateau de fermeture (50) orienté parallèlement au plateau de pression (12) et reliant les parois de support (46), les parois de support (46) comprenant respectivement au moins une ouverture de sortie (52) orientée radialement.

4. Unité embrayage selon la revendication 3,
**caractérisée en ce que**
chaque paroi de support (46) comprend une pluralité d'ouvertures de sortie (53), parmi lesquelles au moins certaines sont disposées de manière décalée axialement les unes par rapport aux autres.

5. Unité embrayage selon la revendication 3,
**caractérisée en ce que**
chaque paroi de support (46) comprend une pluralité d'ouvertures de sortie (52), parmi lesquelles au moins certaines sont disposées de manière décalée axialement les unes par rapport aux autres et de manière à se chevaucher axialement les unes les autres.

6. Unité embrayage selon l'une quelconque des revendications 4 et 5,
**caractérisée en ce que**
des canaux de guidage d'air orientés en. direction des ouvertures de sortie (52) sont réalisés sur le côté radialement intérieur de chaque paroi de support (46).
